(19) Europäisches Patentamt
European Patent Office
Office européen des brevets

(11) Veröffentlichungsnummer: **0 421 377 A2**

(12) # EUROPÄISCHE PATENTANMELDUNG

(21) Anmeldenummer: **90118939.9**

(51) Int. Cl.5: **C08L 67/02**, C08K 5/20

(22) Anmeldetag: **04.10.90**

(30) Priorität: **06.10.89 DE 3933380**

(43) Veröffentlichungstag der Anmeldung: **10.04.91 Patentblatt 91/15**

(84) Benannte Vertragsstaaten: **BE DE DK ES FR GB GR IT LU NL**

(71) Anmelder: **HOECHST AKTIENGESELLSCHAFT**
**Postfach 80 03 20**
**W-6230 Frankfurt am Main 80(DE)**

(72) Erfinder: **Blöcker, Erich, Dr.**
**Cheruskerstrasse 7**
**W-6238 Hofheim am Taunus(DE)**

(54) **Schnellkristallisierende Polyesterformmassen.**

(57) Thermoplastische Formmasse bestehend im wesentlichen aus jeweils mindestens einem (A) Polyalkylenterephthalat mit einer reduzierten spezifischen Viskosität (gemessen in 1 %iger Lösung in Dichloressigsäure bei 25° C) von mindestens 0,3 dl/g, (B) Nukleierungsmittel, (C) Kristallisationsbeschleuniger und (D) gegebenenfalls Verstärkungsmitteln sowie anderen üblichen Zusatzstoffen, bei dem (C) mindestens ein N,N'-disubstituiertes unsymmetrisches Oxalsäurebisamid ist.

Der Einsatz derartiger Komponenten (C) führt bei der Temperung von aus der Formmasse hergestellten Formkörpern nur zu einer geringen Migration und Sublimation, so daß eine einwandfreie Oberflächenbeschaffenheit resultiert. Die in der Formmasse eingesetzten Nukleierungsmittel und Beschleuniger bewirken, daß die Formtemperatur auf mindestens 100 bis 110° C abgesenkt werden kann.

EP 0 421 377 A2

# SCHNELLKRISTALLISIERENDE POLYESTERFORMMASSEN

Die Erfindung betrifft eine thermoplastische Formmasse aus einem Polyalkylenterephthalat, vorzugsweise Polyethylenterephthalat (PET), einem N,N′-disubstituierten unsymmetrischen Oxalsäurebisamid als Weichmacher und einem Nukleierungsmittel, sowie gegebenenfalls mindestens einem Füll- oder Verstärkungsmittel und weiteren üblichen Additiven

Polyalkylenterephthalate haben eine beträchtliche Bedeutung als Rohstoffe für die Herstellung von Fasern, Folien und Formkörpern. Aufgrund ihrer teilkristallinen Struktur und ihrer relativen Wärmebeständigkeit sind sie für die Herstellung mechanisch und thermisch beanspruchter Formteile besonders gut geeignet. Eine zusätzliche Verbesserung der mechanischen Eigenschaften läßt sich durch Einarbeitung von Verstärkungsmaterialien, wie z.B. Glasfasern, erzielen

Reines Polyethylenterephthalat, wie es für die Herstellung von Fasern und Folien verwendet wird, eignet sich nur bedingt für die Herstellung von Formkörpern durch Spritzgießverarbeitung, da aufgrund seiner Kristallisationseigenschaften Formtemperaturen von etwa 140 °C und relativ lange Preßzeiten erforderlich sind. Es wird daher angestrebt, durch geeignete Zusätze die Kristallisationsgeschwindigkeit so zu erhöhen und die Kristallisationstemperatur des PET soweit zu senken, daß man wasserbeheizte Formen verwenden kann und die Zykluszeiten für praktische Zwecke kurz genug sind. Im allgemeinen arbeitet man dabei in der Weise, daß die Kristallisation des PET während der Abkühlung der Schmelze in der Spritzgießform bei einer möglichst hohen Temperatur beginnt und sich beim Abkühlen bis zu einer möglichst tiefen Temperatur fortsetzt. Die Rekristallisationstemperatur $T_R$ gibt die Temperatur an, bei der die Kristallisation aus der Schmelze beim Abkühlen beginnt. Die Kristallisationstemperatur $T_K$ bezeichnet die Temperatur, bis zu der eine wesentliche Kristallisation des Polyesters stattfindet. Beide Kristallisationstemperaturen können mit Hilfe eines Differential Scanning Calorimeters (DSC) gemessen werden.

Es sind viele Zusatzstoffe bekannt, die die Kristallisationseigenschaften von linearen gesättigten Polyestern und besonders von PET beeinflussen können. Eine wichtige Klasse sind die Nukleierungsmittel, die eine Vielzahl von Verbindungen umfaßt (D. Garcia, J. Polym. Sci., Pol. Phys. Ed., 22, (1984), 2063). Als Nukleierungsmittel für PET werden bevorzugt Natrium- oder Kalium-Salze von organischen Carbonsäuren verwendet, wobei diese Carbonsäuren niedermolekularer oder hochmolekularer Natur sein können (DE-B 29 07 729).

Eine andere wichtige Additivklasse sind niedermolekulare organische Verbindungen, die als Weichmacher bezeichnet werden und im wesentlichen einen Einfluß auf die Kristallisationstemperatur $T_K$ und auf die Glastemperatur $T_G$ des Polymeren ausüben. Als solche sind Verbindungen bekannt, die in Kombination mit einem Nukleierungsmittel bei PET eine Erniedrigung der Kristallisationstemperatur $T_K$ ergeben (DE-B 29 07 729). Ferner sind Sulfonsäureester und Imid-Verbindungen als Zusatzstoffe für schnellkristallisierende Polyestermassen beschrieben (DE-B 26 39 428, EP-B 0 214 112 und 0 247 427).

Diese organische Verbindungen sollen als Zusatz mehrere Kriterien bei langsam kristallisierenden Formmassen z.B. bei PET erfüllen, und zwar müssen sie in PET gut genug löslich sein und gleichzeitig die Kristallisationstemperatur erniedrigen bzw. die Kristallisationsgeschwindigkeit erhöhen. Sie dürfen außerdem keine Wechselwirkungen mit dem Polyester in der Schmelze während der Einarbeitung oder Verarbeitung eingehen, die zu einem Abbau des Polyesters führen. Des weiteren sollen sie eine möglichst geringe Migrationsneigung im Polyester besitzen, damit sie bei einer Temperaturbelastung des Formkörpers nicht wesentlich an dessen Oberfläche migrieren und sublimieren. Eine Sublimation insbesondere der niedermolekularen organischen Verbindungen kann zu Belagsbildungen an kälteren Teilen der Umgebung führen und dort z.B. unerwünschte Oberflächeneffekte u.a. bezüglich Leitfähigkeit und Korrosion hervorrufen.

Werden Ester-Verbindungen als kristallisationsbeschleunigende Additive verwendet (DE-B 29 07 779 und EP-A 0 257 331), so können diese zu Wechselwirkungen mit dem Polyester in der Schmelze bei längeren Verweilzeiten führen, d.h. infolge von Umesterungsvorgängen erfolgt dann ein Viskositätsabbau des Polyesters. Sulfonamid-Verbindungen (EP-B 0 096 947) als ebenfalls wirksame Additive sind in der Polyesterschmelze beständiger, zeigen aber noch eine deutliche Flüchtigkeit bei einer Temperung des Polyesters. Bei einer Verwendung höhermolekularer oder oligomerer Verbindungen als Weichmacher und Kristallisationsbeschleuniger ist deren Effektivität nicht so groß, weil sie auf molekularer Basis wirken und deshalb bei einer vergleichbaren molaren Konzentration eine viel höhere Gewichtsmenge eingesetzt werden muß. Dies kann dann wieder zu einer Beeinträchtigung der mechanischen Eigenschaften der Formkörper führen.

Der vorliegenden Erfindung lag die Aufgabe zugrunde, eine schnellkristallisierende Polyesterformmasse auf Basis Polyethylenterephthalat bereitzustellen, die einen möglichst wenig migrierenden und sublimierenden Kristallisationsbeschleuniger enthält.

Die thermoplastische Formmasse gemäß der Erfindung besteht im wesentlichen aus jeweils mindestens einem

(A) Polyalkylenterephthalat mit einer reduzierten spezifischen Viskosität (gemessen in 1 %iger Lösung in Dichloressigsäure bei 25 °C) von mindestens 0,3 dl/g,

(B) Nukleierungsmittel,

(C) Kristallisationsbeschleuniger und

(D) gegebenenfalls Verstärkungsmitteln sowie anderen üblichen Zusatzstoffen, wobei (C) mindestens ein N,N′-disubstituiertes unsymmetrisches Oxalsäurebisamid der Formel

(I) 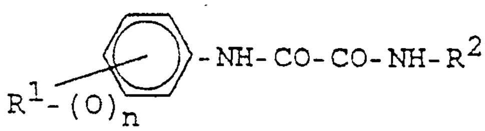

(II) 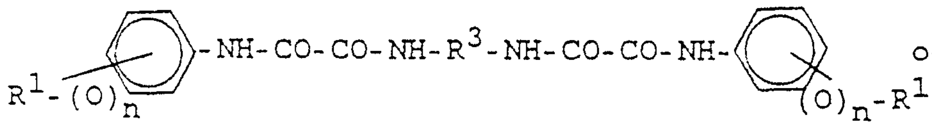 oder

(III) 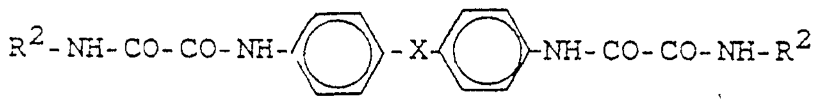 ist,

in der $R^1$ ein Kohlenwasserstoffrest mit 1 bis 4 C-Atomen, $R^2$ ein aliphatischer Kohlenwasserstoffrest mit 10 bis 25 vorzugsweise 12 bis 20 C-Atomen und $R^3$ ein aliphatischer gesättigter oder ungesättigter Alkylenrest mit 4 bis 20, vorzugsweise 8 bis 16 C-Atomen ist, n ist null oder vorzugsweise 1 und X ist $CH_2$, $C(CH_3)_2$, CO, $SO_2$, O oder S.

Die Komponente (C), das Oxalsäurebisamid-Derivat ist in Mengen von 0,5 bis 20, vorzugsweise von 1 bis 10, insbesondere von 2 bis 6 Gew.-%, bezogen auf die Mischung (A) bis (C), in der Mischung mit dem Polyester enthalten.

Für den Polyester gemäß Komponente (A) der erfindungsgemäßen Formmasse kommen grundsätzlich alle bekannten kristallisierfähigen, linearen oder schwach verzweigten Polyester in Frage, wie sie beispielsweise in (R.E. Wilfong, J. Polymer Sci. 54, S. 385-410 (1961) oder in Ullmanns Enzyklopädie der technischen Chemie (4. Aufl.) 19, S. 61-68 (1980), beschrieben sind. Bevorzugt ist jedoch Polyethylenterephthalat. Ein anderer Polyester, der erfindungsgemäß auch eingesetzt werden kann, ist zum Beispiel Polycyclohexan-1,4-dimethylolterephthalat.

Geeignet sind ferner Polyester, die als Säurekomponenten neben Terephthalsäure bis zu 20 Molprozent, vorzugsweise bis zu 10 Molprozent andere aromatische oder aliphatische Dicarbonsäuren und/oder bis zu 2 Molprozent, vorzugsweise bis zu 1 Molprozent tri- oder mehrfunktionelle Carbonsäuren enthalten und die als Diolkomponente neben Propandiol-1,3, Butandiol-1,4, Pentandiol-1,5, Hexandiol-1,6 oder Cyclohexan-1,4-dimethanol, vorzugsweise aber Ethylenglykol, bis zu 20 Molprozent, vorzugsweise bis zu 10 Molprozent andere aliphatische Diole und/oder bis zu 2 Molprozent, vorzugsweise bis zu 1 Molprozent, tri- oder mehrfunktionelle Alkohole enthalten.

Zu den hier angesprochenen Dicarbonsäuren und den tri- oder mehrfunktionellen Carbonsäuren gehören zum Beispiel Isophthalsäure, Phthalsäure, alkylsubstituierte Phthal-, Isophthal- oder Terephthalsäuren, aliphatische Dicarbonsäuren, z.B. Bernsteinsäure, Adipinsäure, Sebacinsäure oder Trimellitsäure.

Zu den oben angesprochenen Diolkomponenten oder den tri-bzw. mehrfunktionellen Alkoholen gehören zum Beispiel Trimethylenglykol, Di- oder Triethylenglykol, Trimethylolpropan oder Pentaerythrit.

Der erfindungsgemäß eingesetzte Polyester hat eine reduzierte spezifische Viskosität; gemessen als 1 %ige Lösung in Dichloressigsäure bei 25 °C, von mindestens 0,3 dl/g, vorzugsweise 0,5 bis 2,0 dl/g und besonders bevorzugt 0,6 bis 1,6 dl/g.

Als Nukleierungsmittel entsprechend der Komponente (B) der erfindungsgemäßen Formmassen kommen die hierfür bei Polyestern bekannten üblichen Verbindungen in Betracht, wie beispielsweise Talkum, Titandioxid, Glimmer, Siliziumdioxid etc. Vorzugsweise werden erfindungsgemäß für diesen Zweck Alkalimetallverbindungen eingesetzt.

Als Verbindungen der Alkalimetalle sind generell alle Verbindungen dieser Metalle mit H-aciden anorganischen oder organischen Verbindungen geeignet, sofern sie die Umesterung oder Polykondensation nicht nachteilig beeinflussen.

Als anorganische Verbindungen der Alkalimetalle, vorzugsweise des Natriums aber auch des Kaliums, kommen beispielsweise die entsprechenden Silikate, Phosphate, Phosphite, Sulfate oder bevorzugt Carbonate, Hydrogencarbonate und Hydroxide in Frage.

Zu den organischen Verbindungen der Alkalimetalle, vorzugsweise des Natriums aber auch des Kaliums, gehören die entsprechenden Salze von aliphatischen, araliphatischen oder aromatischen Carbonsäuren mit vorzugsweise bis zu 30 C-Atomen und vorzugsweise 1 bis 4 Carboxylgruppen. Beispiele hierfür sind die Alkalimetall-Salze der Ameisensäure, Essigsäure, Propionsäure, Stearinsäure, Cyclohexancarbonsäure, Bernsteinsäure, Adipinsäure, Terephthalsäure, Trimellitsäure, Benzoesäure und substituierte Benzoesäuren.

Bevorzugt werden Natriumcarbonat, Natriumhydrogencarbonat, Natriumhydroxid, Natriumsalze von Mono- und Polycarbonsäuren, insbesondere die aliphatischer Mono- und Polycarbonsäuren mit vorzugsweise 2 bis 18 C-Atomen, insbesondere 2 bis 6 C-Atomen und bis zu vier, vorzugsweise bis zu zwei Carboxylgruppen, sowie Natriumalkoholate mit vorzugsweise 2 bis 15 C-Atomen insbesondere 2 bis 8 C-Atomen, verwendet. Beispiele besonders bevorzugter Vertreter sind: Natriumacetat, Natriumpropionat, Natriumbutyrat, Natriumoxalat, Natriummalonat, Natriumsuccinat, Natriummethylat, Natriumethylat, Natriumglykolat. Es können auch Gemische verschiedener Alkalimetallverbindungen eingesetzt werden.

Die Menge an Nukleierungsmittel beträgt im allgemeinen $2.10^{-3}$ bis 0,1 mol, vorzugsweise $5.10^{-3}$ bis $6.10^{-2}$ mol pro kg des Polyesters.

Die Zugabe der Komponente (B) kann je nach Art des Salzes zu unterschiedlichen Zeiten während der Synthese des Polyesters oder während der Einarbeitungsschritte der weiteren Zusatzstoffe erfolgen.

Als Kristallisationsbeschleuniger (Komponente (C)) dient in der erfindungsgemäßen Formmasse mindestens ein N,N′-disubstituiertes, unsymmetrischen Oxalsäurebisamid der vorgenannten Formeln (I) bis (III).

Der Einsatz der substituierten Oxalsäurebisamide gemäß der Erfindung in den thermoplastischen Polyesterformmassen hat den Vorteil, daß diese Amide nicht reaktiv sind mit dem Polyester und nur eine sehr geringe Flüchtigkeit besitzen im Vergleich zu anderen organischen Weichmachern ähnlichen Molekulargewichtes. Sie führen deshalb bei einer Temperung der Formkörper bei höheren Temperaturen, z.B. bei bestimmten Anwendungen, nur zu einer geringen Migration und Sublimation, wie durch Gewichtsmessungen festgestellt werden kann.

Verbindungen der Formel (I) sind als Ultraviolett-Absorber für organische Materialien aller Art, u.a. auch für gesättigte und ungesättigte Polyester bekannt (DE-OS 16 93 010). Ihr möglicher Einsatz als Kristallisationsbeschleuniger ist in der Veröffentlichung nicht erwähnt.

Beispiele für die Verbindungen (C) sind:

Oxalsäure-N-(4-methoxyphenyl-N′-dodecyl-diamid
Oxalsäure-N-(4-methoxyphenyl-N′-octadecyl-diamid
Oxalsäure-N-(4-methoxyphenyl-N′-stearyl-diamid
Oxalsäure-N-(4-methoxyphenyl-N′-oleyl-diamid
Oxalsäure-N-(4-ethoxyphenyl-N′-stearyl-diamid
4,4′-Bis-(N′-stearyloxalamido)-diphenylmethan
1,12-Bis-[N′-(4-methoxyphenyl)-oxalamido]-dodecan.

Die unsymmetrisch substituierten Oxalsäurebisamide wirken infolge ihrer Löslichkeit als Weichmacher und Kristallisationsbeschleuniger besonders in Polyethylenterephthalat, indem sie die Kristallisationstemperatur $T_K$ und die Gastemperatur $T_G$ erniedrigen und so die Zeitdauer der Kristallisation verlängert wird, in der die Polyester-Zusammensetzung in der Form abkühlt. Die Kristallisationsgeschwindigkeit des PET wird durch Nukleierungsmittel (B) und organische Weichmacher (C) als Zusätze bei niedrigeren Temperaturen derart erhöht, daß die Formtemperatur des Spritzgießwerkzeuges auf mindestens 100 bis 110 °C, vorzugsweise auf 80 bis 100 °C abgesenkt werden kann.

Die Formmassen gemäß der Erindung können gegebenenfalls als Komponente (D) Verstärkungsmittel enthalten. Hierzu haben sich Metalle, Silikate, Kohlenstoff, Glas, vornehmlich in der Form von Fasern, Geweben oder Matten sowie Fasern aus hochfesten organischen Hochmodul-Fäden, beispielsweise aus vollaromatischen Polyamiden oder aus flüssigkristallinen Polyestern, bewährt. Bevorzugtes Verstärkungsmaterial sind Glasfasern.

Außerdem können anorganische oder organische Pigmente, Farbstoffe, Gleit- und Trennmittel, UV-Absorber und Thermooxidationsstabilisatoren als übliche Füllstoffe zugesetzt werden. Diese Füll- und Verstärkungsstoffe können bis etwa 60 Gew.-%, vorzugsweise 10 bis 50 Gew.-% der Formmasse ausmachen.

Weiter können die Formmassen bekannte Zusatzstoffe, wie Flammschutzmittel, Schlagzähmodifikatoren, Stabilisatoren, Formtrennmittel, Antistatika oder ähnliches, enthalten. Derartige Zusatzstoffe sind beispielsweise in der DE-Patentschrift 29 20 246 oder in R. Gächter, H. Müller, Kunststoff-Additive, Carl

Hanser Verlag 1983 (München, Wien) beschrieben.

Um flammwidrige Formmassen zu erhalten, werden 2 bis etwa 20 Gew.-%, bezogen auf die Formmassen, an üblichen Flammschutzmitteln zugesetzt. Dies sind z.B. halogenhaltige Verbindungen, elementarer Phosphor oder Phosphorverbindungen, Phosphor-Stickstoff-Verbindungen, Antimontrioxid oder aber Mischungen dieser Substanzen. Bevorzugt wird eine Mischung einer bromhaltigen Verbindung mit Antimontrioxid als Flammschutz-Additiv verwendet.

Schlagzähmodifikatoren oder auch ein anderer Polyester, wie Polybutylenterephthalat als Cokomponente zum Polyethylenterephthalat, oder Polycarbonate oder Polyarylate können mit bis zu 25 Gew.-% Anteil in der Formmasse enthalten sein.

Die Herstellung der Formmassen aus den Komponenten (A) bis (D) kann mit handelsüblichen Mischgeräten oberhalb des Schmelzpunktes des Polyesters bzw. der Mischung in üblicher Weise durchgeführt werden. Die Mischung kann dann schmelzextrudiert und granuliert werden.

Die Formmassen gemäß der Erfindung sind Ausgangsmaterialien für die Herstellung von Formkörpern aller Art, wobei insbesondere nach dem Spritzgußverfahren gearbeitet wird.

Beispiele

Die folgenden Beispiele wurden unter Verwendung von Polyethylenterephthalat mit einer reduzierten spezifischen Viskosität von 0,82 dl/g, gemessen an einer einprozentigen Lösung in Dichloressigsäure bei 25°C, durchgeführt.

Als Nukleierungsmittel wurde wasserfreies Natriumacetat verwendet, das zum Zeitpunkt der PET-Herstellung zugegeben wurde (0,21 % bezogen auf Dimethylterephthalat).

Die Gesamtmischung zur Herstellung der Polyesterformmassen bestand aus:

a) 65,0 Gew.% Polyethylenterephthalat, nukleiert mit Naacetat

b) 30,0 Gew.-% 4,5 mm-Schnittglasfaser

c) 0,5 Gew.-% eines Epoxidharzes auf Basis Bisphenol A und Epichlorhydrin, Epoxidequivalent 750-830

d) 0,25 Gew.-% eines Thermooxidationsstabilisators auf Basis Phosphorigsäuretriarylester und eines sterisch gehinderten Phenols (®Irganox B 225, Ciba-Geigy AG, Basel, Schweiz)

e) 0,25 Gew.-% Formtrennmittel (oxidiertes Polyethylenwachs, Säurezahl 18, Verseifungszahl 32)

f) 4,0 Gew.-% Komponente (C)

Das nukleierte PET wurde mit den organischen Additiven vorgemischt und in einen Doppelschneckenextruder mit konventionellem Schneckenaufbau dosiert, während die Schnittglasfasern über einen zweiten Trichter in der Zone 2 des Extruders in die Schmelze eindosiert wurden. In der darauffolgenden Zone 3 des Extruders wurde unter vermindertem Druck gearbeitet, um flüchtige Bestandteile aus der Schmelze abzuziehen. Die Extrudertemperaturen betrugen in der Einzugszone etwa 240°C und in den anderen Zonen des Extruders bis zur Düse 260 bis 270°C. Der extrudierte Polyesterstrang wurde nach der Kühlzone in einem Wasserbad granuliert.

Die Beurteilung des Kristallisationsverhaltens erfolgte differentialkalorimetrisch mit Hilfe des Gerätes DSC-2C der Firma Perkin-Elmer, Überlingen, Bodensee, Bundesrepublik Deutschland. Um eine einheitliche Ausgangsbasis zu haben, wurden alle Proben (gemahlenes Granulat) vor dem Messen jeweils 5 Minuten bei 290°C unter Stickstoffatmosphäre aufgeschmolzen und anschließend abgeschreckt. Im darauffolgenden Meßzyklus wurden die Proben mit einer Geschwindigkeit von 10°C/min unter Stickstoffatmosphäre von Raumtemperatur (20°C) auf 290°C aufgeheizt und dann direkt mit einer Geschwindigkeit von 20°C/min abgekühlt. Beim Aufheizen der abgeschreckten Proben tritt im Meßzyklus ein exothermer Kristallisationspeak auf, dessen Maximum als Kristallisationstemperatur $T_K$ bezeichnet wird. Beim Abkühlen aus der Schmelze zeigen die Proben ebenso einen Kristallisationspeak, dessen Maximum als Rekristallisationstemperatur $T_R$ bezeichnet wird.

Die Migrations- bzw. Sublimationsbeständigkeit der Additive in der Polyestermatrix wurde im Verlaufe der Temperung von Granulaten und von Formkörpern bei 150°C in einem Trockenschrank über eine bis drei Wochen verfolgt. Dazu wurden die Proben täglich nach Abkühlung auf Raumtemperatur gewogen und die prozentuale Gewichtsabnahme berechnet.

In der Tabelle 1 sind die an den extrudierten Polyester-Formmassen gemessenen Glas- und Kristallisationstemperaturen aufgeführt, die jeweils gleiche Mengenanteile (s.o.) der kristallisationsbeschleunigenden Komponente (C) enthalten. In Figur 1 ist die Gewichtsabnahme in % bei einer Temperung von 10 g des Granulats bei 150°C aufgezeichnet, in Figur 2 die entsprechenden Ergebnisse einer Temperung von Formkörpern. Die Überlegenheit der verwendeten Oxalsäurebisamid-Derivate gemäß der Erfindung ist aus den Darstellungen ersichtlich.

Tabelle 1

| | | | extrud. PET-Formmassen | | | |
|---|---|---|---|---|---|---|
| | | | DSC-Meßwerte (°C): | | | |
| Beispiel | Weichmacher als Krist.-Beschl. | DSC-Fp. (°C) | $T_G$ | $T_K$ | $T_R$ | $T_R$-$T_K$ |
| 1 | Oxalsäurebisamid I | 136 | 66 | 111 | 208 | 97 |
| 2 | Oxalsäurebisamid II | 139 | 65 | 111 | 209 | 98 |
| 3 | Oxalsäurebisamid III | 137 | 67 | 111 | 209 | 98 |
| 4 | Oxalsäurebisamid IV | 232 | 67 | 109 | 207 | 98 |
| 5 | Oxalsäurebisamid V | 95/113 | 64 | 106 | 211 | 105 |
| 6 | Oxalsäurebisamid VI | 232 | 70 | 114 | 209 | 95 |
| Vergl. 1 | ohne | - | 79 | 124 | 208 | 84 |
| Vergl. 2 | Benzolsulfonamid VII | 64/73 | 65 | 109 | 207 | 98 |
| Vergl. 3 | Toluolsulfonamid VIII | 74/82 | 65 | 108 | 208 | 100 |

Verb. I : Oxalsäure-N-(4-methoxyphenyl)-N′-stearyl-diamid
Verb. II : Oxalsäure-N-(4-methoxyphenyl)-N′-octadecyl-diamid
Verb. III : Oxalsäure-N-(4-ethoxyphenyl)-N′-sterаryl-diamid
Verb. IV : 1,12-Bis[N′-(4-methoxyphenyl)-oxalamido]-dodecan
Verb. V : Oxalsäure-N-(4-methoxyphenyl)-N′-oleyl-diamid
Verb. VI : Bis[4-(N′-dodecylamidooxalylamino)-phenyl]-methan
Verb. VII : N-Stearyl-benzolsulfonamid
Verb. VIII : N-Stearyl-p-toluolsulfonamid

## Ansprüche

1. Thermoplastische Formmasse bestehend im wesentlichen aus jeweils mindestens einem
(A) Polyalkylenterephthalat mit einer reduzierten spezifischen Viskosität (gemessen in 1 %iger Lösung in Dichloressigsäure bei 25° C) von mindestens 0,3 dl/g,
(B) Nukleierungsmittel,
(C) Kristallisationsbeschleuniger und
(D) gegebenenfalls Verstärkungsmitteln sowie anderen üblichen Zusatzstoffen,
dadurch gekennzeichnet, daß (C) mindestens ein N,N′-disubstituiertes unsymmetrisches Oxalsäurebisamid der Formel

(I) 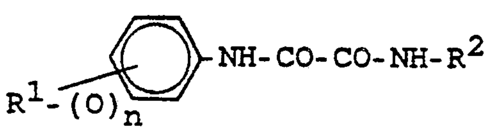

(II) 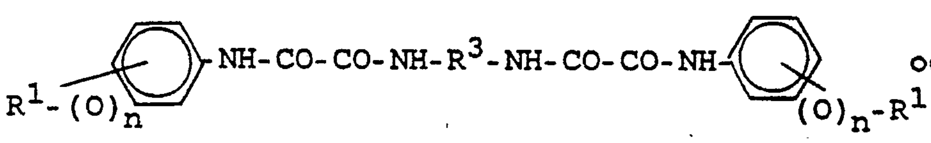 oder

(III) 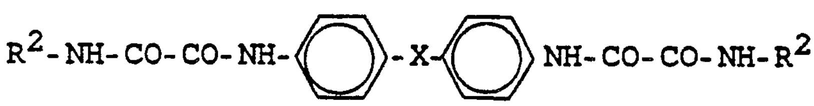

in einer Menge von 0,5 bis 20 Gew.-%, bezogen auf die Mischung (A) bis (C) ist, in der $R^1$ ein Kohlenwasserstoffrest mit 1 bis 4 C-Atomen, $R^2$ ein Kohlenwasserstoffrest mit 10 bis 25 C-Atomen und $R^3$

ein aliphatischer gesättigter oder ungesättigter Alkylenrest mit 4 bis 20 C-Atomen ist, n ist null oder 1 und X ist $CH_2$, $C(CH_3)_2$, CO, $SO_2$, O oder S.

2. Formmasse nach Anspruch 1, dadurch gekennzeichnet, daß das Polyalkylenterephthalat Polyethylenterephthalat ist und daß die Komponente (C) 1 bis 10 insbesondere 2 bis 6 Gew.-% der Mischung ausmacht.

3. Formmasse nach Anspruch 1 oder 2, dadurch gekennzeichnet, daß die Komponente (A) eine Viskosität von 0,5 bis 2,0 dl/g aufweist und die Menge an Komponente (B) $2.10^{-3}$ bis 0,1 mol pro kg des Polyalkylenterephthalats beträgt.

4. Formmasse nach einem oder mehreren der Ansprüche 1 bis 3, dadurch gekennzeichnet, daß sie als Nukleierungsmittel eine Natrium- und/oder Kalium-Verbindung enthält.

5. Formmasse nach einem oder mehreren der Ansprüche 1 bis 4, dadurch gekennzeichnet, daß sie als Nukleierungsmittel das Natriumsalz einer Carbonsäure oder einer polymeren Verbindung mit Carboxylgruppen enthält.

6. Formmasse nach einem oder mehreren der Ansprüche 1 bis 5, dadurch gekennzeichnet, daß sie bis zu 60 Gew.-%, bezogen auf die Komponenten (A) bis (D), aus einem Füll-und/oder einem Verstärkungsmittel besteht.

7. Formmasse nach einem oder mehreren der Ansprüche 1 bis 6, dadurch gekennzeichnet, daß sie bis zu 25 Gew-%, bezogen auf die Formmasse, eines Schlagzähmodifikators, eines anderen Polyesters, Polycarbonats oder Polyarylats enthält.

8. Verwendung der Formmasse nach Anspruch 1 zur Herstellung von Formkörpern.

9. Formkörper nach Anspruch 8, hergestellt nach dem Spritzgußverfahren.

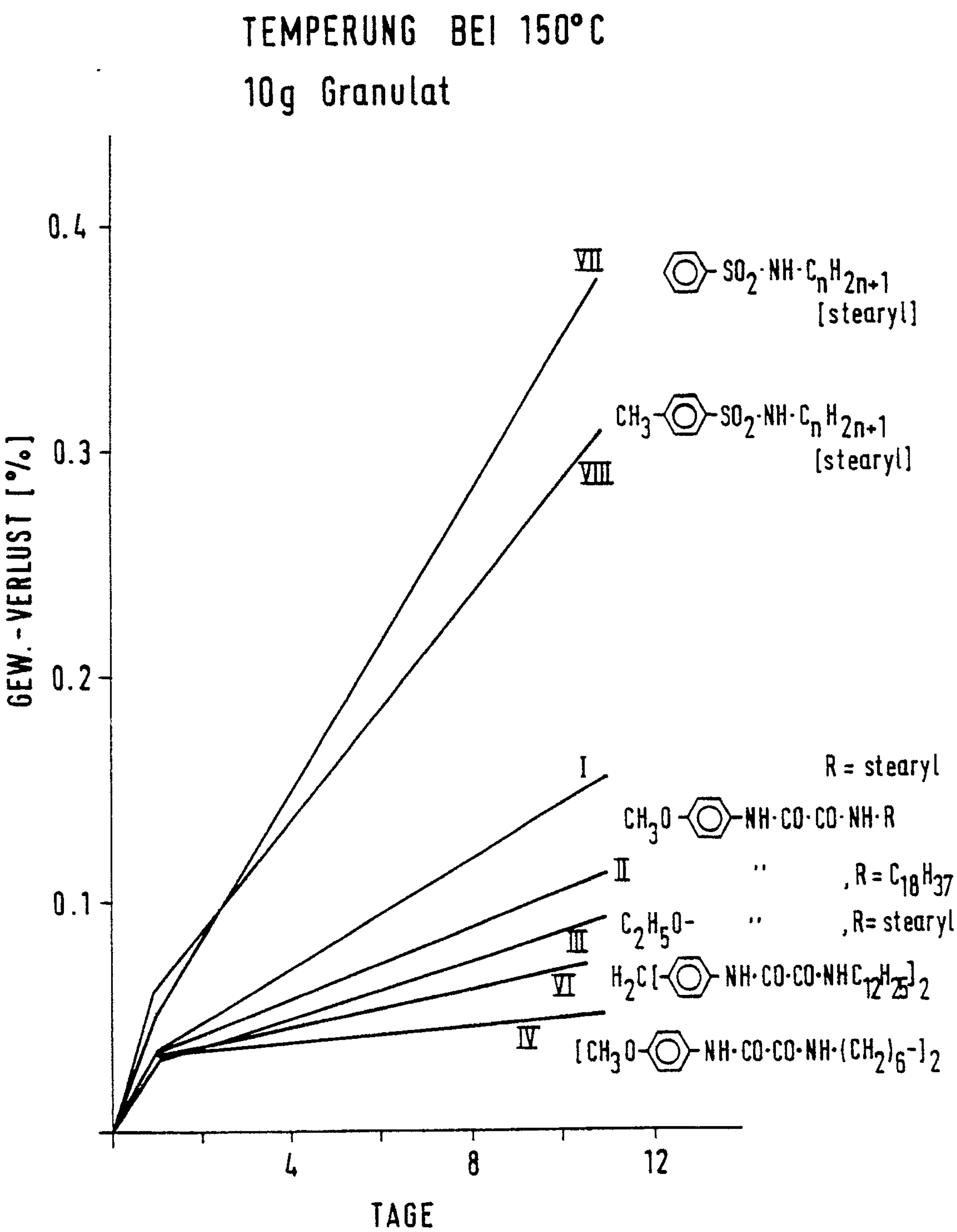
TEMPERUNG BEI 150°C
10g Granulat
GEW.-VERLUST [%]
0.4
0.3
0.2
0.1
4
8
12
TAGE
VII
[stearyl]
VIII
[stearyl]
I
R = stearyl
II
, R = $C_{18}H_{37}$
III
, R= stearyl
VI
IV

Fig. 1

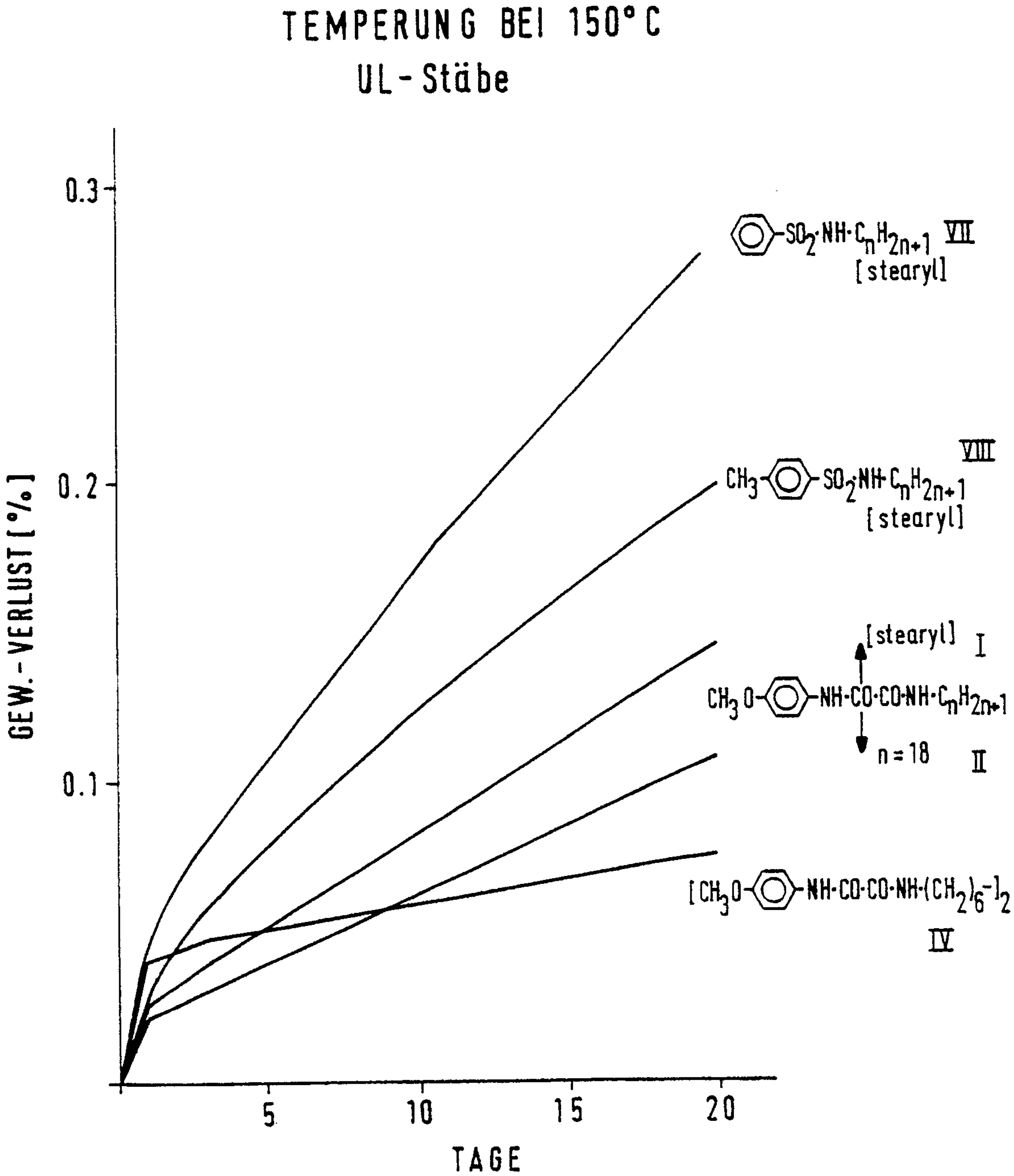
TEMPERUNG BEI 150°C
UL-Stäbe
GEW.-VERLUST [%]
0.3
0.2
0.1
5
10
15
20
TAGE
VII
[stearyl]
VIII
[stearyl]
[stearyl] I
n = 18 II
IV

Fig. 2